# EUROPÄISCHE PATENTANMELDUNG

(11) **EP 1 655 647 A1**
(43) Veröffentlichungstag der Anmeldung: **10.05.2006**
(21) Anmeldenummer: 05022409.6
(22) Anmeldetag: 14.10.2005
(51) Int. Cl.: G05B 19/418

(54) **Abgesicherte Verbundeinrichtung für internetbasierte CM-System**

(30) Priorität: 04.11.2004 DE 102004053818; 05.11.2004 DE 102004054050; 22.11.2004 DE 102004056237
(71) Anmelder: Prüftechnik Dieter Busch AG, 85737 Ismaning (DE)
(72) Erfinder: Schühle, Roland, 88213 Ravensburg (DE)

(57) **Zusammenfassung**

Ein Condition-Monitoring (CM)-Gesamtsystem mit mindestens einer CM-Zentrale (60) und zugehörigen beliebig lokalisierbaren CM-Systemen (50, 52) samt zugehörigen LAN- und/oder Internet - Datennetz-Strukturen wird so ausgelegt, daß protokollblockierende logische oder physikalische Vorrichtungen (PB5, PB6, PB8) den Datenverkehr überwachen und sicherstellen, daß bei einem Datentransfer aus dem Hoheitsbereich des Internets in Richtung eines CM-Systems (50, 60) im Wesentlichen e-mail-Datenverkehr stattfindet, nach intensiver und umfangreicher Prüfung der e-mail-Daten auf adverse Inhalte.

## Beschreibung

Die vorliegende Erfindung betrifft eine Verbundeinrichtung und ein zugehöriges Verfahren zur Übertragung von Informationen unter Verwendung des Internets und seiner logischen und physikalischen Komponenten. Insbesondere betrifft die Erfindung ein zugehöriges Verfahren, um eine besonders hohe Zuverlässigkeit, Verfügbarkeit und Schutz für die Datenübertragung für Condition-Monitoring(CM)-Systeme incl. deren Sensoren oder deren zugehörige Aktoren, innerhalb einer Verbundanordnung von über- und untergeordneten zugehörigen Computern zu erwirken. Eine solche Verbundanordnung kann sehr dezentralisiert, mit vielen Satellitenanordnungen, aufgebaut sein.
Das somit zu lösende Problem, nämlich sehr gut abgesicherte Internetverbindungen für CM-Systeme bereitzustellen, hat weniger technische als psychologische Ursachen, da es in der Vergangenheit im Internet bedauerlicherweise zu einer enormen Steigerung des Versandes von adverser Software in Form von Viren und dgl. gekommen ist und eine Steigerung dieses Phänomens leider nicht auszuschließen ist.
Die Erfindung löst dieses Problem dadurch, daß ein Condition-Monitoring (CM)-Gesamtsystem mit mindestens einer CM-Zentrale und zugehörigen beliebig lokalisierten CM-Systemen und zugehörigen LAN- und/oder Internet- Datennetz-Strukturen vorgesehen wird, bei denen protokollblockierende logische oder physikalische Vorrichtungen den Datenverkehr überwachen und sicherstellen, daß bei einem Datentransfer aus dem Hoheitsbereich des Internets in Richtung eines CM-Systems (50, 60) praktisch lediglich (und in einer bevorzugten Ausgestaltung der Erfindung einzig und ausschließlich) e-mail-Datenverkehr stattfinden kann.
Gemäß der Erfindung wird eine solche Verbundeinrichtung dadurch realisiert, daß von den im Internet zugelassenen Datentransferpfaden wie z.B. File Transfer Protocol (FTP), HTTP, UDP, und SMTP (e-Mail-Transfer) oder anderer mit großem Vorteil auch, bevorzugt ausschließlich, der e-mail-Transfer für das Senden und speziell für das Empfangen von Daten durch CM-Systeme zugelassen wird. Andererseits ist es gemäß der Erfindung zugelassen, dass innerhalb eines kontrollierten und überwachten LAN (Local Area Network) sämtliche denkbaren Datenübertragungsprotokolle von und zu einem CM-System zugelassen sind.

Die Vorteile einer solchen gezielten Beschränkung der Internetnutzung bestehen darin, daß Daten, welche eine feindliche und adverse Programmierungswirkung, speziell eine Umprogrammierungswirkung entfalten, einfacher und gezielter von vernetzten CM-Systemen und deren Sensoren oder Aktoren ferngehalten werden können. Solche adversen Daten können z.B. in Java-Applets, Active-X-Elementen, Makros für Softwareprodukte wie Mikrosoft-Windows oder Microsoft Excel enthalten sein. Es kann sich natürlich aber auch reguläre Computer-Viren, sog. Trojaner, sog. Spyware und andere unerwünschte softwarebasierte Agentien handeln. Insofern sieht die Erfindung vor, daß der gewünschte und legitime Datenaustausch zwischen einer irgendwo auf der Welt befindlichen CM-Zentrale und ebenfalls nahezu beliebig plazierbaren CM-Systemen sich zwar der Internet-Infrastruktur bedient, aber für dessen Nutzung als Daten-Transfer-Medium lediglich die Kommunikation via e-mail-Server oder vergleichbarer Komponenten und über zugehörige Protokolle wie SMTP zuläßt. Jedwegliche andere Kommunikationsprotokolle, die per Internet zugelassen oder dort vorhanden sind, werden im Zusammenhang mit im wesentlichen autonom arbeitenden CM-Systemen für die Zwecke der Erfindung gesperrt oder allenfalls auf Kundenwunsch zugelassen. Unbeschadet davon können außerhalb des Hoheitsbereiches des Internets alle möglichen anderen physikalischen und logischen Datenübertragungsmechanismen und Protokolle für den Datentransfer eines CM-Gesamtsystems zugelassen werden.
Insbesondere ist es ein Anliegen der Erfindung, einen zuverlässigen und gut verfügbaren Datentransfer zum Zwecke einer Um- oder Neukonfiguration von nur gelegentlich betreuten CM-Systemen zu schaffen. Dies wird dadurch erreicht, daß insbesondere und speziell die Übersendung von Daten zum Zwecke der Übertragung von Kommandos, von Parametern, von Programmteilen oder ganzen Programmen (z.B. sog. Upgrades) also auch sog. Updates, mit großem Vorteil lediglich per e-mail-Datenkanälen vorgenommen wird. In einer besonderen und restriktiven Ausgestaltung der Erfindung wird darauf abgezielt, eine derartige Übersendung von Daten lediglich und ausschließlich per e-mail-Datenkanälen, z.B. nach Maßgabe des SMTP-Protokolls, vorzunehmen.
Als Beispiel für die Anwendungsmöglichkeit des erfindungsgemäßen Verfahrens sei eine CM Anwendung an Offshore-Windkraftwerken vor mehreren europäischen Küsten genannt, deren einzelne aktuelle Parameter wie lokale Windstärke, Lufttemperatur, aktuell erzeugte Leistung, Wirkungsgrad, Fehlerfreiheit usw. weltweit unter Nutzung des Internets abgefragt werden können, und deren Einstellungen wie Anstellwinkel der Flügel usw. im Prinzip von einer jeden authorisierten Kontrollstation eines zugehörigen CM-Systems modifiziert werden könnten, und deren interne Programme zu solchen Zwecken aus der Ferne authorisiert umgewandelt werden sollen. Es versteht sich, daß für die Zwecke einer einwandfreien Authorisierung spezielle Maßnahmen ergriffen werden müssen, und daß dementsprechend jeder Versuch einer nicht-autorisierten Fremdeinwirkung auf zugehörige CM-Einzelsysteme und Maschinen praktisch erfolglos bleiben sollte.
Die jüngere Entwicklung der Internet-Technologie und die vielfältigen adversen Attacken auf Hard- und Softwarekomponenten gutgläubiger Nutzer des Internets lassen es gemäß der Erfindung nicht mehr ohne weiteres zu, daß sämtliche zur Verfügung stehenden Möglichkeiten des Datenaustausches via Internet für die hier durchzuführenden Aktionen zugelassen werden können. Die Beschränkung eines solchen Datenaustausches lediglich auf den e-mail Datenverkehr z.B. nach Maßgabe des SMTP, und in diesem Zusammenhang ggf. auch nur mit dort anzuwendenden zusätzlichen Einschränkungen, bietet hier eine zusätzliche Sicherheit. Insbesondere wird durch die Erfindung besser abgesichert, daß eine an sich erwünschte Umprogrammierungsmöglichkeit im Umfeld der beteiligten CM-Einzelsystem für unauthorisierte Personen und Angreifer deutlich erschwert wird.

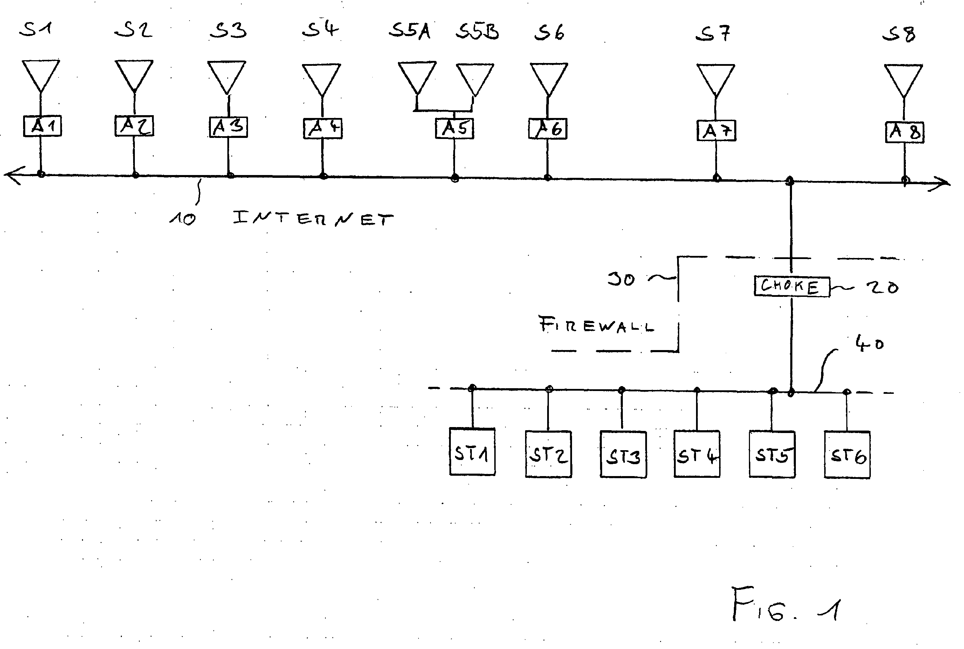

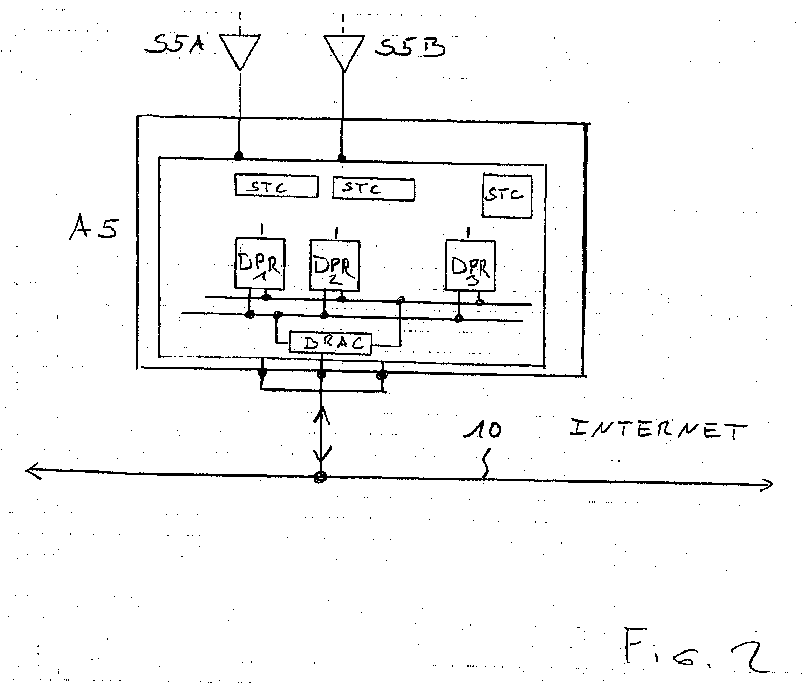

Die Erfindung wird im Folgenden anhand der Zeichnungen erläutert.
Eine erste Ausführungsform der Erfindung wird in Fig. 1 gezeigt. Eine Mehrzahl von Sensoren (oder aber Aktoren) S1, S2, S3, .... ist an beliebigen interessierenden Plätzen vorgesehen, lokal oder weltweit. Die Sensoren sollen mittels geeigneter Fernabfrageeinrichtungen aufgerufen und abgefragt werden. Aktoren sollen auf vergleichbare Weise betätigt werden können. Hierzu wird die Hardware und die Infrastruktur des Internets 10 verwendet. Auf diese Weise kann zumindest ein Computer, z.B. ST1, bevorzugt aber beliebig viele, und im Prinzip beliebig plazierbare, Computer über das Internet mit solchen Sensoren oder Aktoren in informatorische Wirkverbindung ("online-Verbindung") gebracht werden. Hierzu ist es in an sich bekannter Weise erforderlich, daß die Sensoren über geeignete Koppelpunkte A1 .... A8 ... usw. sich an das Internet anbinden können, sei es drahtgebunden oder drahtlos. Bei Bedarf kann ein einzelner Koppelpunkt auch für mehrere Sensoren zuständig sein, z.B. Koppelpunkt A5 mit Sensoren / Aktoren S5A und S5B. Als reguläre Endpunkte am Internet sind die Koppelpunkte A... in der Lage, sowohl Daten protokollgerecht zu senden als auch zu empfangen, zum Beispiel von einer im unteren Teil der Fig. 1 dargestellten lokalen Computer-Konstellation ST1 .....ST6, welche über ein Intranet 40 lokal miteinander verbunden sein möge und über geeignete Server und Filter- und Sicherungsstrukturen wie eine sog. Firewall 30 oder ein sog. Choke 20 an das Internet angeschlossen ist. Aber auch praktisch jeder andere geeignete reguläre Endpunkt des Internets (in Fig. 1 nicht näher ausgewiesen) kann ganz regulär versuchen, eine logisch-informatische Verbindung zu einem der Koppelpunkte A1, A..... einzurichten. Gemäß der Erfindung wird aus Sicherheitsgründen nunmehr aber lediglich zugelassen, daß die logisch-informatische Verbindung so aufgebaut und bereitgestellt wird, dass die Koppelpunkte A.... im Maximalfall die Funktionsumfange von e-mail-Servern aufweisen und somit lediglich in der Lage sind, Informationen im Umfange von e-mails gemäß weltweiten Standards d.h. bevorzugt SMTP zu empfangen oder zu versenden. Allerdings gehört zu solchen Funktionsumfängen auch die Fähigkeit, die zu sendenden und auch die zu empfangenden e-mails auf Viren und andere adverse Softwarekomponenten zu überprüfen. Bei Bedarf werden spezielle sog. Attachments zu den e-mails für den Datentransfer gesperrt oder an eine Kontrollinstanz weitergeleitet. Die genannten Attachments können nämlich Softwareviren oder logische Bestandteile enthalten, deren adverse Softwareeigenschaften nicht sofort oder nicht ohne weiteres zu erkennen sind.
Es gibt vielfältige Möglichkeiten, eine auf die erfindungsgemäße Weise besser abgesicherte Internet-Konnektivität zwischen einer Bedienstation z.B. ST1 und einem entfernt angebrachten Sensor (oder Aktor) S8 mit zusätzlichen und weiteren Schutzmöglichkeiten auszustatten.
Ein Beispiel zeigt Fig. 2, bei denen Einzelheiten zu internen Funktionen des Koppelpunktes A5 dargestellt sind. Der Koppelpunkt ist in an sich bekannter Weise mit geeigneten Standard-Rechner-Komponenten STC ausgestattet, auf die hier nicht näher eingegangen zu werden braucht, da sie dem Fachmann bekannt sind. Ansonsten ist der Koppelpunkt in der Lage, die Signale von Sensoren S5A und S5B entgegenzunehmen und als digitales Signal über das Internet zu versenden, sei es in vorprogrammierter, eingenständiger Weise, oder nach Aufruf durch einen legitimierten Absender mit einem vereinbarten e-mail-Text bzw. -Code.

Anstelle standardmäßiger Speicherbausteine für den internen Controller des Koppelpunktes A5 werden jedoch Dual-Port-RAMS bzw. - ROMS verwendet. Im Zusammenhang mit solchen Spezial-Speicherbausteinen erhält jeder Koppelpunkt sodann mindestens zwei separate e-mail-Adressen. Eine dieser e-mail-Adressen bleibt vertraulich und ist vorrangig nur dem legitimen Betreiber einer per Fernwirktechnik abfragbaren oder einzustellenden Anlage bekannt. Je nach angewählter e-mail-Adresse des Koppelpunktes A5 wird per Weiche BRAC bewirkt, daß die Speicherbausteine DPR1 ... DPR3 entweder in einem ersten, unkritischen Schreib-/Lese-Zustand zur Verfügung stehen (für normale Betriebsweise), oder aber in einem zweiten, sensitiven Schreib-/Lese-Zustand, bei dem ein signifikanter Teil oder praktisch die gesamte restliche Funktionalität des Koppelbausteins umprogrammiert werden kann, wie dies durch den legitimen Eigentümer einer solchen Anlage von Fall zu Fall gewünscht sein kann. - Anstelle der Verwendung von Dual-Port-Speicherbausteinen kann eine äquivalente Struktur mit separierten Speicherbereichen verwendet werden. - Es versteht sich, daß nach Anwahl des Koppelpunktes in der genannten zweiten Betriebsart unbedingt zusätzliche Authentizitätsprüfungen durchgeführt werden, nach Maßgabe absolut geheimer Algorithmen. Auf diese Weise ist es bei zufalliger und versehentlicher Anwahl eines solchen Koppelpunktes in seiner zweiten Betriebsweise nicht sofort möglich, eine Umprogrammierung von Teilen oder des kompletten internen Speichers DPR1 ..... DPR 3 vorzunehmen.

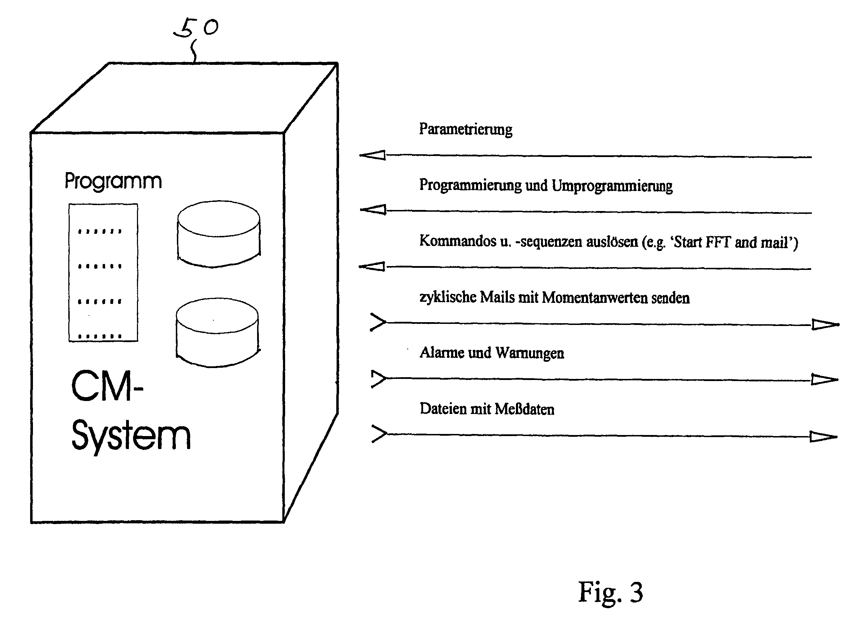

Eine zweite, bevorzugte Ausgestaltung der Erfindung wird in Fig. 3, 4 und 5 gezeigt.
Anstelle einzelner Sensoren und zugehöriger Koppelpunkte sind komplette CM-Systeme 50 vorgesehen, welche zwar ebenfalls vergleichbare Funktionen wahrnehmen können, darüberhinaus zusätzliche Funktionsumfange aufweisen im Sinne eigenständiger Rechnersysteme. Diese weisen typischerweise eigene ablauffähige Programmstrukturen auf, umfangreiche Speichermöglichkeiten (ggf. auch Massenspeicher wie Flash-Memory, Harddisks o.ä.). Wie in Fig. 3 ausgewiesen, können die auf ein solches CM-System 50 einwirkende Daten z.B. der Parametrierung der an dieses angeschlossene Sensoren dienen, oder sogar der Parametrierung z.B. hinsichtlich eines einstellbaren Leistungsumfanges des Systems 50 selbst. Insbesondere kann ein solches CM-System 50 aus der Ferne programmiert oder umprogrammiert werden. Durch spezielle Datenströme und Kommandos, die an ein solches CM-System 50 gerichtet sind, können gezielte Abläufe initiiert werden. Ein Beispiel wäre, nicht nur physikalische Größen zu sensieren und als Datenstrom an eine CM-Zentrale zu senden, sondern bereits an Ort und Stelle eine oder mehrere Integraltransformationen auf solche sensierten Daten anzuwenden und das entsprechende Ergebnis an die CM-Zentrale zu senden. Darüberhinaus ist ein solches CM-System typischerweise in der Lage, je nach eintretenden äußeren Bedingungen z.B. Alarme und Warnungen zu generieren und an die CM-Zentrale zu schicken, oder komplette Dateien mit Sätzen gesammelter Meßdaten abzugeben (auch im Falle einer anderen Abfragestation als der Zentrale), oder gemäß voreinstellbarem und auch umprogrammierbarem Turnus aktuell registrierte Daten an vordefinierte Nutzer zu schicken. Dabei ist die Nutzung des Internet optional, d.h. prinzipiell möglich, aber nicht zwingend vorgegeben.

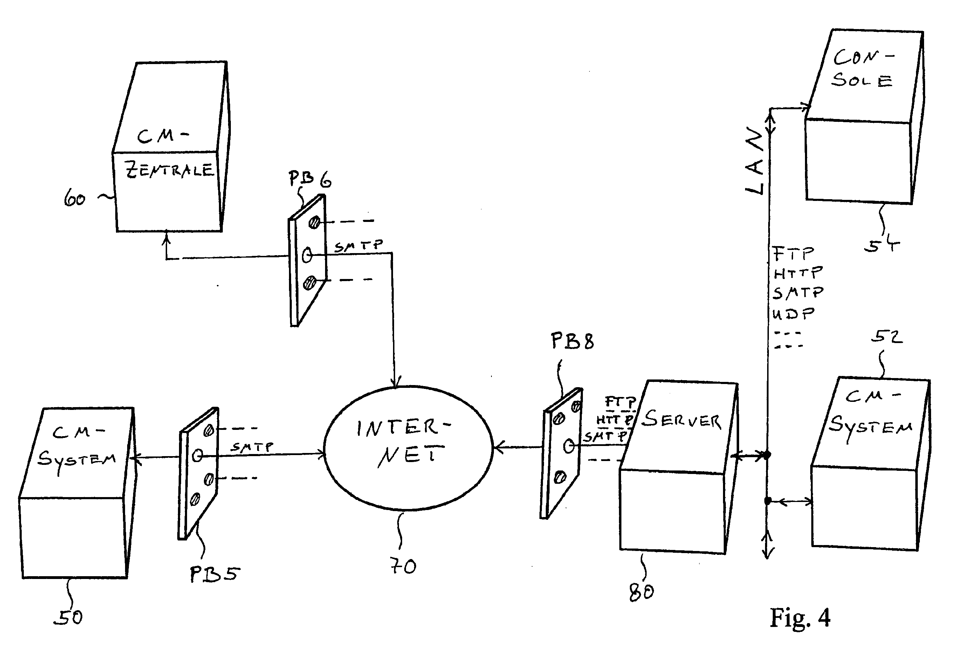

Eine zugehörige Gesamtstruktur wird in Fig. 4 in schematischer Weise gezeigt. Diverse CM-Systeme, von denen in Fig. beispielsweise zwei mit den Bezugsziffern 50, 52 identifiziert sind, können mit einer (oder mehreren) CM-Zentrale(n) 60 zu einem CM-Gesamtsystem zusammengeschaltet sein. Hierzu wird die Nutzung der Internet-Struktur 70 mit seinen Hardware-Möglichkeiten zugelassen. Wie beim obengenannten anderen Ausführungsbeispiel wird auch in diesem Falle aber lediglich das SMTP-Protokoll oder ein direkt vergleichbares zugelassen, damit im wesentlichen, oder bevorzugt ausschließlich, der Transfer von e-mail basierten Daten möglich ist. Zu diesem Zweck sind Subsysteme mit der Funktion einer Protokollblockierung PB5, PB6, PB8 usw. vorgesehen, welche praktisch nur solche Datenströme in das Internet abgeben, und, in Gegenrichtung, aus dem Internet in Richtung der CM-Systeme oder einer CM-Zentrale nur solche Datenstöme passieren lassen, wenn diese als e-mails identifizierbar bzw. mit dem SMTP - Protokoll konform sind. Für alle anderen Protokolle wirken diese Subsystem PB5, PB6 usw. normalerweise als Logische Sperren.
Wie auf der rechten Seite der Fig. 4 dargestellt, ist es aber innerhalb einer kontrollierten Netzwerkumgebung, z.B. an einem LAN (local area network) innerhalb einer Fabrik möglich, daß andere, schnellere oder weniger prüfende Protokolle für den Datentransfer von und zu den dort angeschlossenen CM-Systemen (z.B. Bezugsziffer 52 und weitere, nicht gezeigte) zugelassen sind. Insofern können solche Sub-Systeme auch mit einer eigenen Bedien- und Überwachungskonsole 54 ausgestattet sein, welche unabhängig von einer CM-Zentrale 60 agieren kann, sei es vollautomatisch oder nach den Intentionen einer Bedienperson.

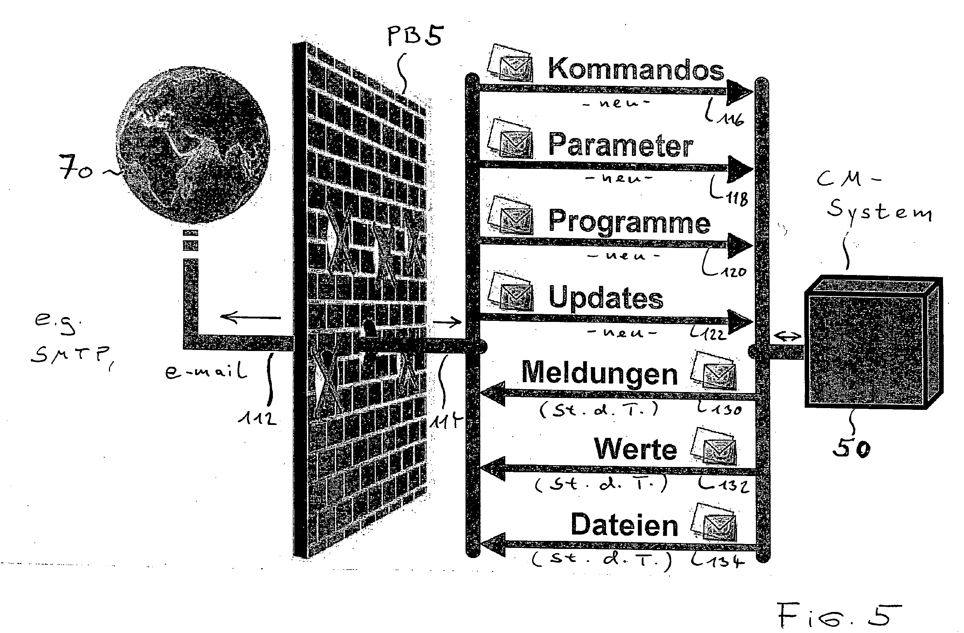

Völlig autonom und in unzugänglicher Umgebung aufgestellte CM-Systeme, z.B. 50, können wie im ersten Ausführungsbeispiel angegeben mit zusätzlichen Sicherungsmechanismen ausgestattet sein. Auf diese Weise sind adverse Verbindungen von und zu einer attackierenden Kommandoquelle aus dem Internet praktisch ausgeschlossen.
Das Wesen der zweiten Ausführungsform und der Unterschied zum bekannten Stand der Technik wird in Fig. 5 dargestellt. Wie im vorhergehenden beschrieben, kann ein CM-System (Bezugszeichen 50) Daten an beliebige Empfänger im Internet 70 senden. Solche Daten können z.B. autonom erzeugte Meldungen (Bezugszeichen 130) sein, oder Meßwerte (132) oder auch Dateien (134). Dies kann z.B. per e-mail-Datenkanal (112) geschehen, was dem bereits bekannten Stand der Technik entspricht. Der neue Ansatz der Erfindung hingegen ist es, daß nunmehr diverse, insbesondere sensitive Datenströme per e-mail Datenkanal (114) an ein CM-System 50 gerichtet werden können und sollen, und somit in einer wesentlich besser abgesicherten Weise als dies bislang möglich war. Insofern ist auch eine Verwendung der der Einrichtung PB5 zugeordneten softwaremäßigen Schutzmechanismen wie intensiv prüfende Virenscanner oder dergleichen vorgesehen. Insbesondere sind unter sensitiven Datenströmen Kommandos (116), Parameter (118), Programme oder Upgrades (120) und Updates (122) zu verstehen, welche an ein CM-System 50 gerichtet sind und in deren Folge das CM-System einen veränderten Funktionsumfang oder eine modifizierte Funktionalität aufweist.

## Patentansprüche

1. Verfahren zur fernwirktechnischen Abfrage oder Betätigung von mit dem Internet verbindbarer Sensoren oder Aktoren,
**dadurch gekennzeichnet, daß** der Datentransfer von und zu den Sensoren oder Aktoren (S1, S2, S3, .... S8) ausschließlich durch solche hard- und softwaremäßige Einrichtungen vorgenommen wird, die für die Übertragung von e-mail-Daten vorgesehen sind.

2. Verbundeinrichtung für internetbasierte Sensoren oder Aktoren und korrespondierenden Datenverarbeitungsanlagen (Hosts), enthaltend eine Hardware- und Softwarestruktur, welche lediglich und ausschließlich einen e-Mail basierten Datenverkehr per SMTP zwischen solchen Sensoren oder Aktoren und korrespondierenden Datenverarbeitungsanlagen (Hosts) zuläßt.

3. Verbundeinrichtung nach Anspruch 2, bei dem die internetbasierten Sensoren oder Aktoren über einen speziellen Koppelpunkt (A1 ...... A8) abfragbar oder anschaltbar sind, wobei der spezielle Koppelpunkt mit einer ersten und zumindest einer weiteren e-mail-Adresse ausgestattet ist und derartige interne elektronische Anordnungen und Strukturen aufweist, daß bei Anwahl des Koppelpunktes über die erste e-mail-Adresse ein unkritischer Betriebszustand ohne Programmierungsmöglichkeit für diesen, und bei Anwahl des Koppelpunktes über die zweite oder eine weitere e-mail-Adresse ein sensitiver Betriebszustand mit Programmierungsmöglichkeit für den Koppelpunkt eingestellt wird.

4. Condition-Monitoring (CM)-Gesamtsystem mit mindestens einer CM-Zentrale (60) und zugehörigen beliebig lokalisierten CM-Systemen (50, 52) und zugehörigen LAN- und/oder Internet- Datennetz-Strukturen, bei denen mittels protokollblockierenden logischen oder physikalischen Vorrichtungen (PB5, PB6, PB8) dafür gesorgt wird, daß bei Datentransfer aus und/oder in den Hoheitsbereich des Internets bevorzugt e-mail-Datenverkehr stattfindet; oder lediglich solche Daten aus dem Internet akzeptiert werden, die als e-mails identifizierbar oder dem SMTP-Protokoll zuzuordnen sind.

5. Condition-Monitoring (CM)-Gesamtsystem mit mindestens einer CM-Zentrale (60) und zugehörigen beliebig lokalisierten CM-Systemen (50, 52) und zugehörigen LAN- und/oder Internet- Datennetz-Strukturen, bei denen mittels protokollblockierenden logischen oder physikalischen Vorrichtungen (PB5, PB6, PB8) dafür gesorgt wird, daß bei einem Datentransfer aus dem Hoheitsbereich des Internets in Richtung eines CM-Systems (50, 60) wahlweise herkömmlicher (FTP, HTTP) oder alternativ ausschließlich e-mail-Datenverkehr stattfindet.

6. Condition-Monitoring (CM)-Gesamtsystem mit mindestens einer CM-Zentrale (60) und zugehörigen beliebig lokalisierten CM-Systemen (50, 52) und zugehörigen LAN- und/oder Internet- Datennetz-Strukturen, bei denen protokollblockierende logische oder physikalische Vorrichtungen (PB5, PB6, PB8) den Datenverkehr überwachen und sicherstellen, daß bei einem Datentransfer aus dem Hoheitsbereich des Internets in Richtung eines CM-Systems (50, 60) einzig und ausschließlich e-mail-Datenverkehr stattfinden kann.

7. Condition-Monitoring (CM)-Gesamtsystem nach Anspruch 6, bei dem die protokollblockierenden Vorrichtungen (PB5, PB6, PB8) geeignet sind, eine Vielzahl von Prüf-, Scan- und Testverfahren gegen adverse Softwarelemente wie z.B. Computer-Viren oder sog. Trojaner durchzuführen.
